**Europäisches Patentamt**

**European Patent Office**

**Office européen des brevets**

(19)

(11) Veröffentlichungsnummer: **0 111 645**
**B1**

(12) **EUROPÄISCHE PATENTSCHRIFT**

(45) Veröffentlichungstag der Patentschrift:
03.05.89

(51) Int. Cl.⁴: **G 06 F 1/00, F 16 M 11/12**

(21) Anmeldenummer: **83109339.8**

(22) Anmeldetag: **20.09.83**

(54) Halterung für ein Datensichtgerät.

(30) Priorität: **24.09.82 DE 3235457**

(43) Veröffentlichungstag der Anmeldung:
**27.06.84 Patentblatt 84/26**

(45) Bekanntmachung des Hinweises auf die Patenterteilung:
**03.05.89 Patentblatt 89/18**

(84) Benannte Vertragsstaaten:
**AT FR GB NL SE**

(56) Entgegenhaltungen:
**EP-A- 0 058 242**
**DE-A- 2 847 135**
**US-A- 3 244 450**
**US-A- 3 534 935**

(73) Patentinhaber: **Siemens Aktiengesellschaft Berlin und München, Wittelsbacherplatz 2, D-8000 München 2 (DE)**

(72) Erfinder: **Sarnezki, Herbert, Ing. grad., Konrad-Celtis-Strasse 6b, D-8000 München 70 (DE)**
Erfinder: **Hübner, Klemens, Ing. grad., Zaunkönigstrasse 28, D-8012 Ottobrunn (DE)**

## Beschreibung

Die Erfindung betrifft eine Halterung gemäß dem Oberbegriff des Anspruchs 1. Eine solche Vorrichtung wird in der DE-OS 2 847 135 beschrieben.

Der vorbekannte Bildschirmträger ist folgendermaßen ausgeführt: Die eigentliche Bildschirmeinheit ruht auf einem zweiteiligen Stützarm, der seinerseits von einem massiven Sockel ausgeht. Die Verbindung Sockel/Stützarm ist so gestaltet, daß man den Arm um eine vertikale Achse drehen und auch noch um eine horizontale Achse schwenken kann. Die beiden Stützarmteile werden bei einer Schwenkbewegung ebenfalls gegeneinander verdreht, und zwar derart, daß die mitbewegte Bildschirmeinheit ihre Raumorientierung beibehält, d.h., lediglich eine Parallelversetzung erfährt. Die Bildschirmeinheit läßt sich überdies auch noch gegenüber dem Stützarm kippen. Eine derartige Konstruktion erlaubt es, die Darstellungsfläche des Geräts praktisch in jede beliebige Stellung zu bringen; sie ist allerdings mechanisch recht aufwendig und verschleißanfällig, und zwar vor allem deshalb, weil sie drei Drehgelenke benötigt, die jeweils erheblichen Drehmomenten standhalten müssen.

Aufgabe der vorliegenden Erfindung ist es, eine Halterung der eingangs genannten Art so abzuwandeln, daß sie mit weniger Drehachsen auskommt und dennoch alle wesentlichen ergonomischen Forderungen erfüllt. Diese Aufgabe wird erfindungsgemäß durch eine Bauform mit den Merkmalen des Anspruchs 1 gelöst.

Die vorgeschlagene Halterung verfügt über ein einziges Gelenk, nämlich das Dreh- und Schwenkgelenk im Fußpunkt des Stützarms. Das reicht aus, denn das Gelenk gestattet Armbewegungen, mit denen das – am Arm fixierte – Bildschirmteil seitlich gedreht bzw. geneigt wird, und die Bildschirmhöhe kann durch Änderung der Armlänge eingestellt werden. Der längenvariable Stützarm, der erfindungsgemäß aus zwei ineinander geschobenen, durch ein gewichtskompensierendes Element auseinandergedrückten und mit einem Rastgesperr verriegelten Hohlkörpern besteht, ist stabil und enthält eine relativ einfache Mechanik aus bequem zusammensetzbaren Einzelteilen. Im übrigen läßt sich das Gerät auch bequem in Position bringen, da man nicht durch das Lösen oder Feststellen von Arretierungen aufgehalten wird und in den meisten Bewegungsrichtungen nur geringe Gegenkräfte zu überwinden hat.

Vorteilhafte Ausgestaltungen und Weiterbildungen der Erfindung sind Gegenstand zusätzlicher Ansprüche.

Der Lösungsvorschlag soll nun anhand eines besonders bevorzugten Ausführungsbeispiels in Verbindung mit der beigefügten Zeichnung näher erläutert werden. In den Figuren sind einander entsprechende Teile mit gleichem Bezugszeichen versehen. Es zeigen:

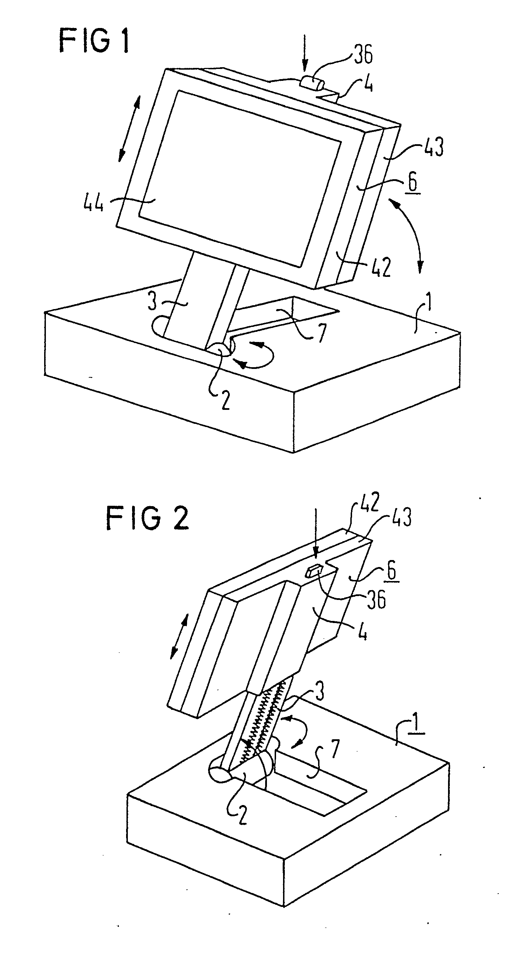

Fig. 1 das Ausführungsbeispiel in einer schematisch gehaltenen Perspektivensicht;

Fig. 2 das Beispiel der Fig. 1, gesehen aus einer anderen Perspektive;

Fig. 3 eine teilweise weggebrochene Vorderansicht des Stützarmbodenteils einschließlich des Drehtellers und eines Teils der Basisplatte;

Fig. 4 von der Fig. 3 den Schnitt IV–IV;

Fig. 5 die Rückansicht des teilweise weggebrochenen Stützarmbodenteils;

Fig. 6 eine teilweise geschnittene Vorderansicht des Stützarmkopfteils; und

Fig. 7 den Schnitt VII–VII der Fig. 6.

Die dargestellte Halterung trägt einen Flachbildschirm, der beispielsweise zur Darstellung farbiger Bewegtbilder verwendet werden kann und in seinen technischen Merkmalen in «Elektronik» 14 (1982) 79 beschrieben wird. Die Halterung selbst besteht im wesentlichen aus folgenden Teilen: einer Basisplatte 1, einem Drehteller 2, einem aus einem Bodenteil 3 und einem Kopfteil 4 zusammengesteckten Stützarm und einem Bildschirmgehäuse 6.

Die Bodenplatte ist ein flacher Kasten, der einige elektrische Bauteile – speziell die Stromversorgung für den Flachbildschirm – enthält und auf vier (nicht dargestellten) Gummifüßen, die an einer seiner beiden rechteckigen Grundflächen angebracht sind, rutschfest auf seiner Unterlage ruht. Die Kastenoberseite besitzt eine Vertiefung 7, die den Drehteller 2 umgibt und auch den Stützarm aufnimmt, wenn er horizontal liegt und seine beiden Teile 3, 4 vollständig ineinandergeschoben sind.

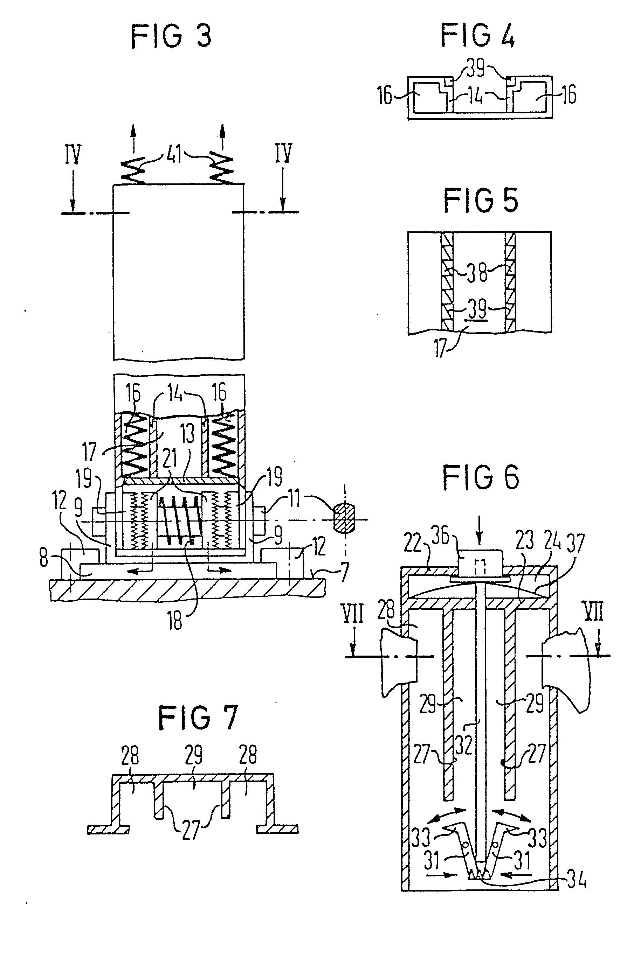

Der Drehteller enthält, wie aus der Fig. 3 hervorgeht, eine Drehscheibe 8, einen im Profil U-förmigen Aufsatz 9 und eine durch die beiden U-Schenkel des Aufsatzes horizontal geführte Welle 11. Die Scheibe 8 liegt dem Boden der Vertiefung 7 auf und wird durch Backen 12, die im Vertiefungsboden verankert sind und die Drehscheibe 8 in ihrer Randzone übergreifen, gehaltert, derart, daß sich der Drehteller um eine senkrechte Achse drehen läßt. Scheibe, Aufsatz und Welle sind starr miteinander verbunden; damit sich die Welle 11 gegenüber dem Aufsatz nicht drehen kann, hat sie, wie dargestellt, das Profil einer segmentierten Kreisfläche und sitzt in entsprechend geformten Lagern.

Das Bodenteil 3 ist, wie den Figuren 3 und 4 am besten zu entnehmen, ein im Profil rechteckiger Hohlkörper, in dem durch eine Bodenwand 13 sowie durch zwei zu den Rechteckschmalseiten parallel verlaufende Trennwände 14 drei Kammern gebildet sind: zwei Außenkammern 16 sowie eine Mittelkammer 17. Alle drei Kammern sind nach oben hin offen, und der Mittelkammer fehlt auch noch die Rückseite. Wie in Fig. 3 dargestellt, sind die beiden schmalen Seitenwände des Bodenteils 3 über die Bodenwand 13 hinaus verlängert und ragen – drehbar um die Welle 11 gelagert – in den nach oben offenen Drehtelleraufbau 9 hinein.

Die gesamte Anordnung ist derart im Gleichgewicht, daß der Drehteller 2 in keiner der ihm möglichen Positionen arretiert werden müßte. Anders ist dies bei der Drehlagerung des Bodenteils 3, auf die praktisch in jeder Stützarmstellung ein Drehmoment ausgeübt wird. Dementsprechend trägt die Welle 11 zwei Rastscheibenpaare sowie eine Druckfeder 18. Die außenliegenden Rastscheiben 19 eines jeden Rastscheibenpaares sind – drehbar um die Welle 11 – an den Innenflächen der Bodenteilseitenwände fixiert, während die jeweils innenliegenden Rastscheiben 21 nicht drehbar, aber axial verschieblich auf der Welle 11 angeordnet sind und durch die Druckfeder 18, die im vorliegenden Fall als Schraubenfeder ausgeführt ist, gegen die jeweils zugeordneten Rastscheiben 19 gepreßt werden und dabei mit ihrem eigenen Rastprofil in das Rastprofil der Gegenscheibe eingreifen. Das gesamte Rastgesperr ist dabei so ausgelegt, daß man den Stützarm aus seiner Horizontallage um jeweils 5° bis zu maximal 95° verschwenken kann und daß einem aufwärts oder abwärts gerichteten Schwenk ein geringer bzw. relativ großer Widerstand entgegengesetzt wird.

Das Kopfteil 4 des Stützarms ist in der dargestellten Ausführung ein integraler Bestandteil des Bildschirmgehäuses 6. Es hat die Form eines auf der Gehäuserückseite vorspringenden Steges, der über das Bodenteil geschoben wird. Das Kopfteil 4 ist ähnlich wie das Bodenteil 3 ein im Querschnitt rechteckiger Hohlkörper, der kopfseitig durch eine Deckplatte 22 abgeschlossen wird, bodenseitig offen ist und dessen Inneres durch eine nahe der Deckwand 22 plazierte, zu ihr parallele Zwischenwand 23 in zwei Hohlräume 24, 26 unterteilt wird. Der Hohlraum 26 wird seinerseits durch zwei Rippen 27, die sich, ausgehend von der Rück- und Zwischenwand des Kopfteils, über mindestens zwei Drittel der Hohlraumtiefe bzw. -Höhe erstrecken, in zwei Außenräume 28 und einen Mittelraum 29 gegliedert. Das gesamte Profil ist so bemessen, daß beim Ineinanderschieben der beiden Stützarmteile die Außenwände der Kammern 16 in der Innenwandung der Räume 28 gleiten.

Wie Fig. 6 zeigt, enthält das Kopfteil 4 in seinem Inneren zwei Rastklinken 31 sowie einen Rasthebel 32. Die Rastklinken sind an der Rückseite des Kopfteils drehbar befestigt; die Drehachsen liegen auf gleicher Höhe und verlaufen horizontal. Die beiden Rastklinken sind an ihren oberen Enden jeweils mit einer nach außen weisenden Spitze 33 versehen und werden an ihren unteren Enden durch eine gemeinsame Zugfeder 34 nach innen gezogen, so daß sie, von vorn gesehen, ein «V» bilden. In dieses ‹V› ragt das eine Ende des Rasthebels 32, der parallel zur Längsachse des Kopfteils verläuft und mit seinem anderen Ende durch die Deckplatte 22 ragt. Dieses hervorstehende Hebelende trägt einen Druckknopf 36, der auf einer im Hohlraum 24 abgestützten Blattfeder 37 ruht. In Ruhestellung des Rasthebels 32 greifen die Rastklinkenspitzen 33 jeweils in Rastkerben 38 einer Rastkerbenleiste 39 ein. Diese Leisten sind jeweils in eine der Trennwände 14 des Bodenteils 3 eingebracht (Figuren 4 und 5).

Betätigt man den Druckknopf 36, so senkt sich der Rasthebel 32 ab und treibt die unteren Enden der beiden Rastklinken 31 auseinander, mit der Folge, daß die Rastklinkenspitzen 33 zurücktreten und die Rastkerbenleisten 39 freigeben. In dieser Stellung kann das Kopfteil 4 gegenüber dem Bodenteil 3 verschoben werden. Hat der Stützarm die richtige Länge, so läßt man den Druckknopf los; die Rastklinken kehren dann in ihre Sperrstellung zurück. Damit die Längenverstellung ohne besonderen Kraftaufwand vor sich gehen kann, sind in den beiden Armabschnitten, die jeweils durch eine Außenkammer 16 und den zugehörigen Außenraum 28 gebildet werden, Druckfedern 41 untergebracht. Diese Federn sind so dimensioniert, daß sich der Stützarm bei gedrücktem Knopf verlängern will. Würde man anstelle der Druckfedern Luftkolben als gewichtsausgleichende Elemente verwenden, so würde der Stützarm bei entriegeltem Rastgesperr allmählich immer kürzer werden. Der gesamte Armlängenhub beträgt im dargestellten Beispiel etwa 20 cm.

Das Bildschirmgehäuse 6 ist wie die Basisplatte 1 ein flacher Kasten mit rechteckigen Grundflächen (Frontseite, Rückseite). Die Frontseite wird im wesentlichen von dem Anzeigenfeld 44 der Bildschirmeinheit eingenommen, während die Rückseite das Kopfteil 4, als einen stegartigen, parallel zu den Schmalseiten der Grundfläche erstreckten Vorsprung, enthält.

Um die im Bildschirmgehäuse untergebrachte Ansteuereinheit elektrisch mit dem in der Basisplatte befindlichen Netzteil zu verbinden, wird ein Bandkabel vom Bildschirmgehäuse unsichtbar durch den Stützarm geführt, wobei es in der Mittelkammer des Bodenteils abrollen kann, und in die Bodenplatte eingesteckt.

## Patentansprüche

1. Halterung für ein einen Bildschirm enthaltendes Datensichtgerät, mit

a) einer plattenförmigen, flach aufliegenden Basisplatte (1);

b) einem kastenförmigen, den Bildschirm umgebenden Bildschirmgehäuse (6);

c) einem auf der Oberseite der Basisplatte um eine vertikale Achse drehbar gelagerten Drehteller (2);

d) einem Stützarm aus zwei langgestreckten, hohlen Teilen, von denen

e) das eine Teil, Bodenteil (3) genannt, an dem ersten seiner beiden Enden im Drehteller um eine horizontale Achse drehbar gelagert ist und

f) das andere Teil, Kopfteil (4) genannt, am ersten seiner beiden Enden mit dem Bildschirmgehäuse verbunden ist; dadurch gekennzeichnet, daß

g) die Verbindung zwischen dem Kopfteil (4) und dem Bildschirmgehäuse (6) starr ist;

h) die beiden Stützarmteile (3, 4) mit ihren jeweiligen zweiten Enden ineinandergeschoben sind und

i) durch mindestens ein im Inneren des Stützarms befindliches Ausgleichselement (41) auseinandergedrückt werden;

j) das eine Stützarmteil (3) mindestens eine Reihe aus in Längsrichtung des Stützarms aufeinanderfolgenden Rastkerben (38) enthält und eine Rastkerbenleiste (39) bildet; und

k) das andere Stützarmteil (4) mindestens eine um eine horizontale Achse drehbar gelagerte, über einen Rasthebel (32) von außen betätigbare Rastklinke (31) enthält, die in Ruhestellung in die Rastkerbenleiste (39) eingreift und bei Betätigung des Rasthebels (32) die Rastkerbenleiste (39) freigibt.

2. Halterung nach Anspruch 1, dadurch gekennzeichnet, daß der Kopfteil (4) über das Bodenteil (3) geschoben ist und vorzugsweise mit dem Bildschirmgehäuse (6) baulich integriert ist.

3. Halterung nach den Ansprüchen 1 oder 2, dadurch gekennzeichnet, daß das Kopfteil (4) die Rastklinke (31) und den Rasthebel (32) und das Bodenteil (3) die Rastkerbenleiste (39) enthält.

4. Halterung nach einem der Ansprüche 1 bis 3, dadurch gekennzeichnet, daß zwei langgestreckte Rastklinken (31) mit zueinander parallelen, auf gleicher Stützarmhöhe befindlichen Drehachsen vorgesehen sind, deren erste Enden durch eine Zugfeder (34) miteinander verbunden sind und deren zweite Enden mit voneinander wegweisenden Ansätzen («Spitzen» 33) versehen sind, und daß der Rasthebel (32) ein parallel zur Längsachse des Stützarms verlaufender Stab ist, der bei Betätigung die ersten Enden der beiden Rastklinken (31) gegen die Zugfeder (34) auseinanderdrückt.

5. Halterung nach Anspruch 4, dadurch gekennzeichnet, daß der Rasthebel (32) durch eine im Stützarm gelagerte Feder, insbesondere Blattfeder (37), in der Ruhestellung gehalten wird.

6. Halterung nach einem der Ansprüche 1 bis 5, dadurch gekennzeichnet, daß der Stützarm einen rechteckigen Querschnitt hat und zumindest über einen Teil seiner gesamten Länge drei, durch parallel zu den Schmalseiten des Rechtecks verlaufende Innenwände (Trennwände 14, Rippen 27) voneinander abgeteilte Hohlräume enthält, von denen die beiden äußeren jeweils ein Ausgleichselement enthalten.

7. Halterung nach Anspruch 6, dadurch gekennzeichnet, daß zur Bildung der drei Hohlräume das Bodenteil drehtellerseitig eine quer zur Längsachse des Stützarms verlaufende Bodenwand (13) sowie durchgehende Trennwände (14) enthält und das über das Bodenteil (3) geschobene Kopfteil (4) gehäuseseitig eine quer zur Längsachse des Stützarms verlaufende Zwischenwand (23) sowie von der Zwischenwand (23) und der Rückwand des Kopfteils (4) ausgehende Rippen (27) enthält, wobei die Rückwand des Bodenteils (3) zwischen dessen beiden Trennwänden (14) entfernt ist und die Vorderwand des Kopfteils (4) bis auf zwei parallel zur Längsachse des Stützarms verlaufende Randstreifen entfernt ist.

8. Halterung nach Anspruch 7, dadurch gekennzeichnet, daß die beiden Trennwände (14) auf ihren einander zugewandten Seiten jeweils eine Rastkerbenleiste (39) aufweisen.

9. Halterung nach einem der Ansprüche 6 bis 8, dadurch gekennzeichnet, daß ein elektrisches Kabel abrollbar im mittleren Hohlraum des Stützarms geführt ist.

10. Halterung nach einem der Ansprüche 1 bis 9, bei der der Stützarm drehbar auf einer starr mit dem Drehteller verbundenen, von einer Feder umgebenen Welle gelagert ist, dadurch gekennzeichnet, daß die Welle zusätzlich noch zwei Rastscheiben trägt, von denen die erste Rastscheibe (19) um die Welle (11) drehbar am Bodenteil (3) fixiert ist und die zweite Rastscheibe (21) axial verschiebbar auf der Welle (11) gelagert ist und durch Andruck der Feder (Druckfeder 18) mit der ersten Rastscheibe (19) in einem bremsenden Eingriff steht.

11. Halterung nach Anspruch 10, dadurch gekennzeichnet, daß zwei Rastscheibenpaare vorgesehen sind, deren zweite Rastscheiben (21) einander zugewandt sind und durch eine zwischengeordnete Druckfeder (18) gegen die ihnen jeweils zugeordneten ersten Rastscheiben (19) gedrückt werden.

12. Halterung nach Anspruch 10 oder 11, dadurch gekennzeichnet, daß die Welle (11) eine an zwei gegenüberliegenden Seiten abgeplattete Kreisfläche als Querschnitt hat.

**Claims**

1. Support for a data display unit comprising a picture screen, having
   a) A laminar, flat-resting base plate (1);
   b) A box-shaped picture screen housing (6) surrounding the picture screen;
   c) A turntable (2) mounted rotatably about a vertical axis on the upper side of the base plate;
   d) A stay arm formed by two elongate hollow parts, of which
   e) The one part, called the base part (3), is mounted rotatably about a horizontal axis in the turntable by the first of its two ends and
   f) The other part, called the head part (4), is connected to the picture screen housing by the first of its two ends; characterized in that
   g) The connection between head part (4) and the picture screen housing (6) is rigid;
   h) The two stay arm parts (3, 4) are telescoped together by their respective second ends and
   i) Are urged apart by at least one compensating element (41) located in the interior of the stay arm;
   j) The one stay arm part (3) comprises at least one row of arresting notches (38) consecutive in the longitudinal direction of the stay arm and forms an arresting notch bar (39); and
   k) The other stay arm part (4) comprises at least one arresting pawl (31) mounted rotatably about a horizontal axis and actuable from outside by an arresting lever (32) which engages into the arresting notch bar (39) and releases the arresting notch bar (39) when the arresting lever (32) is actuated.

2. Support according to Claim 1, characterized in that the head part (4) is slid over the base part (3) and is preferably integrated structurally with the picture screen housing (6).

3. Support according to claim 1 or 2, characterized in that the head part (4) comprises the arresting pawl (31) and the arresting lever (32), and the base part (3) the arresting notch bar (39).

4. Support according to one of Claims 1 to 3, characterized in that two elongated arresting pawls (31) having mutually parallel axes of rotation located at the same stay arm height are provided, the first ends of which are connected together by a traction spring (34) and the second ends of which are provided with attachments ("Points" 33) facing away from each other, and in that the arresting lever (32) is a rod oriented parallel to the longitudinal axis of the stay arm, which when actuated urges the first ends of the two arresting pawls (31) apart counter to the traction spring (34).

5. Support according to Claim 4, characterized in that the arresting lever (32) is maintained in the rest position by a spring, particularly leaf spring (37), mounted in the stay arm.

6. Support according to one of Claims 1 to 5, characterized in that the stay arm has a rectangular cross-section and comprises at least along part of its total length three cavities divided from each other by inner walls (partition walls 14, ribs 27) oriented parallel to the narrow sides of the rectangle, the two outer of which each contains a compensating element.

7. Support according to Claim 6, characterized in that to form the three cavities the base part comprises on the turntable side a base wall (13) oriented transversely to the longitudinal axis of the stay arm and continuous partitioned walls (14) and the head part (4) which is slid over the base part (3) comprises on the housing side a partition wall (23) oriented transversely to the longitudinal direction of the stay arm and ribs (27) starting from the partition wall (23) and the rear wall of the head part (4), the rear wall of the base part (3) being removed between its two partition walls (14) and the front wall of the head part (4) being removed except for two edge strips oriented parallel to the longitudinal axis of the stay arm.

8. Support according to claim 7, characterized in that the two partition walls (14) each exhibit an arresting notch bar (39) on their sides which face each other.

9. Support according to one of Claims 6 to 8, characterized in that an electric cable is guided unwindably in the central cavity stay arm.

10. Support according to one of Claims 1 to 9, in which the stay arm is mounted rotatably on a shaft connected rigidly to the turntable and surrounded by a spring, characterized in that the shaft additionally carries two arresting discs, of which the first arresting disc (19) is fixed rotatably about the shaft (11) to the base part (3) and the second arresting disc (21) is mounted axially slidably on the shaft (11) and is in braking engagement with the first arresting disc (19) by pressure of the spring (compression spring 18).

11. Support according to Claim 10, characterized in that two pairs of arresting discs are provided, the second arresting discs (21) of which face each other and are urged against their respectively associated first arresting discs (19) by an interposed compression spring (18).

12. Support according to Claim 10 or 11, characterized in that the shaft (11) has as cross-section a circular surface flattened on two opposite sides.

**Revendications**

1. Support pour un appareil de visualisation de données contenant un écran, comportant
   a) une plaque de base plate (1), posée à plat;
   b) un boîtier (6) pour l'écran, réalisé en forme de boîte et entourant ce dernier;
   c) un plateau rotatif (2) monté, de manière à pouvoir tourner autour d'un axe vertical, sur la face supérieure de la plaque de base;
   d) un bras de support formé de deux parties allongées creuses, dont
   e) l'une, dite partie de base (3), est montée, de manière à pouvoir tourner autour d'un axe horizontal, par une première de ses deux extrémités, dans le plateau rotatif, et dont
   f) l'autre, dite partie de tête (4), est reliée, au niveau de la première de ses deux extrémités, au boîtier de l'écran; caractérisé par le fait que
   g) la liaison entre la partie de tête (4) et le boîtier (6) de l'écran est rigide;
   h) les deux parties (3, 4) du bras de support sont insérées l'une dans l'autre, par leurs deux extrémités respectives, et
   i) sont écartées l'une de l'autre au moyen d'un élément d'équilibrage (41) situé à l'intérieur du bras de support;
   j) une partie (3) du bras de support contient au moins une série d'encoches d'encliquetage (38), qui se succèdent dans la direction longitudinale du bras de support, et forme une barrette (39) à encoches d'encliquetage; et
   k) l'autre partie (4) du bras de support contient un cliquet de blocage (31), qui est monté de manière à pouvoir tourner autour d'un axe horizontal, peut être actionné de l'extérieur par l'intermédiaire d'un levier d'encliquetage (32) et, dans la position de repos, s'engage dans la barrette (39) à encoches d'encliquetage et, lors de l'actionnement du levier d'encliquetage (32), libère la barrette (39) à encoches d'encliquetage.

2. Support suivant la revendication 1, caractérisé par le fait que la partie de tête (4) est emmanchée par-dessus la partie de base (3) et est de préférence intégrée, du point de vue construction, au boîtier (6) de l'écran.

3. Support suivant les revendications 1 ou 2, caractérisé par le fait que la partie de tête (4) contient le cliquet de blocage (31) et le levier d'encliquetage (32) et que la partie de base (3) contient la barrette (39) à encoches d'encliquetage.

4. Support suivant l'une des revendications 1 à 3, caractérisé par le fait qu'il est prévu deux cliquets de blocage allongés (31), qui possèdent deux axes de rotation parallèles, situés à la même hauteur du bras de support et dont les premières extrémités sont reliées entre elles par un ressort de traction (34) et dont les secondes extrémités sont pourvues d'appendices saillants («pointes» 33) s'écartant l'un de l'autre, et que le levier d'encliquetage (32) est une barre, qui est parallèle à l'axe longitudinal du bras de support et, lors de l'actionnement, écarte l'une de l'autre les premières extrémités des deux cliquets de blocage (31) à l'encontre du ressort de traction (34).

5. Support suivant la revendication 4, caractérisé par le fait que le levier d'encliquetage (32) est maintenu dans la position de repos par un ressort monté dans le bras de support, notamment un ressort en forme de lame (37).

6. Support suivant l'une des revendications 1 à 5, caractérisé par le fait que le bras de support possède une section transversale rectangulaire et contient, au moins sur une partie de sa longueur totale, trois cavités, qui sont séparées les unes des autres par des parois intérieures (parois de séparation 14, nervures 27) parallèles aux petits côtés du rectangle, et parmi lesquelles les deux cavités extérieures contiennent chacune un élément d'équilibrage.

7. Support suivant la revendication 6, caractérisé par le fait que, pour la formation des trois cavités, la partie de base contient, du côté du plateau rotatif, un élément de fond (13), qui s'étend transversalement par rapport à l'axe longitudinal du bras de support, ainsi que des parois de séparation continues (14), et la partie de tête (4), emmanchée par-dessus la partie de base (3), contient une paroi intercalaire (23), qui s'étend transversalement par rapport à l'axe longitudinal du bras de support, ainsi que des nervures (27) qui s'étendent à partir de la paroi intercalaire (23) et de la paroi arrière de la partie de tête (4), que la paroi arrière de la partie de base (3) est supprimée entre ses deux parois de séparation (14) et que la paroi avant de la partie de tête (4) est supprimée en dehors de deux bandes marginales parallèles à l'axe longitudinal du bras de support.

8. Support suivant la revendication 7, caractérisé par le fait que les deux parois de séparation (14) possèdent des barrettes respectives (39) à encoches d'encliquetage, sur leurs faces tournées l'une vers l'autre.

9. Support suivant l'une des revendications 6 à 8, caractérisé par le fait qu'un câble électrique circule, de manière à pouvoir être déroulé, dans la cavité centrale du bras de support.

10. Support suivant l'une des revendications 1 à 9, dans lequel le bras de support est monté de manière à pouvoir tourner sur un arbre relié rigidement au plateau rotatif et entouré par un ressort, caractérisé par le fait que l'arbre porte, en supplément, deux disques d'encliquetage, dont le premier (19) est fixé de manière à pouvoir tourner sur la partie de base (3) et dont le second (21) est monté de manière à être déplaçable axialement sur l'arbre (11) et engrène, de manière à réaliser une action de freinage, avec le premier disque d'encliquetage (19) sous l'action de la pression du ressort (ressort de pression 18).

11. Support suivant la revendication 10, caractérisé par le fait qu'il est prévu deux couples de disques d'encliquetage, dont les seconds disques (21) sont tournés l'un vers l'autre et sont repoussés, par un ressort de pression intercalé (18), contre les premiers disques d'encliquetage (19), qui leur sont respectivement associés.

12. Support suivant la revendication 10 ou 11, caractérisé par le fait que l'arbre (11) possède, comme section transversale, une surface circulaire aplatie sur deux côtés opposés.

FIG 1

FIG 2

# FIG 3

# FIG 4

# FIG 5

# FIG 6

# FIG 7